# EUROPÄISCHE PATENTSCHRIFT

(11) **EP 2 373 738 B1**
(45) Veröffentlichungstag und Bekanntmachung des Hinweises auf die Patenterteilung: **14.05.2014**
(21) Anmeldenummer: 09756517.0
(22) Anmeldetag: 25.11.2009
(51) Int. Cl.: C08L 29/10, C08L 33/02, C08L 35/08, C04B 24/26

(54) **COPOLYMERMISCHUNG ENTHALTENDES DISPERGIERMITTEL**
DISPERSANT COMPRISING A MIXTURE OF COPOLYMERS
AGENT DISPERSANT COMPRENANT UN MÉLANGE DE COPOLYMÈRES

(30) Priorität: 08.12.2008 EP 08170983
(43) Veröffentlichungstag der Anmeldung: 12.10.2011
(73) Patentinhaber: Construction Research & Technology GmbH, 83308 Trostberg (DE)
(72) Erfinder: LORENZ, Klaus, 84539 Zangberg (DE); VIERLE, Mario, 83512 Wasserburg (DE); ALBRECHT, Gerhard, 83209 Prien (DE); WIMMER, Barbara, 83342 Tacherting (DE); WAGNER, Petra, 83308 Trostberg (DE); SCHOLZ, Christian, 84518 Wald an der Alz (DE)
(86) Internationale Anmeldenummer: PCT/EP2009/065791
(87) Internationale Veröffentlichungsnummer: WO 2010/076096

(56) Entgegenhaltungen:
- EP-A1- 0 556 061
- EP-A1- 0 924 174
- WO-A1-00/77058
- WO-A2-2005/075529

## Beschreibung

Die vorliegende Erfindung betrifft eine Polymerkomposition, ein Dispergiermittel, die Herstellung der Polymerkomposition und des Dispergiermittels sowie die Verwendung der Polymerkomposition.

Es ist bekannt, dass man wässrigen Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, die Bildung von Feststoffagglomeraten zu verhindern, die bereits vorhandenen und durch Hydratation neu gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips, Halbhydrat oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren und/oder Säurederivatmonomeren mit Polyethermakromonomeren hergestellt werden.

In der WO 2005/075529 werden Copolymere beschrieben, welche neben Säuremonomer-Struktureinheiten als Polyethermakromonomer-Struktureinheiten Vinyloxybutylenpoly(ethylenglykol)-Struktureinheiten aufweisen. Derartige Copolymertypen sind als Hochleistungsfließmittel weit verbreitet, da diese vorzügliche Anwendungseigenschaften aufweisen.

Obwohl die beschriebenen Copolymere als wirtschaftliche Hochleistungsfließmittel anzusehen sind, besteht weiterhin ein Bestreben, die Qualität und die Wirtschaftlichkeit der Copolymere noch weiter zu verbessern.

Die der vorliegenden Erfindung zugrunde liegende Aufgabe ist es somit, ein wirtschaftliches Dispergiermittel für hydraulische Bindemittel bereitzustellen, welches sich insbesondere gut als Fließmittel für Beton eignet.

Die Lösung dieser Aufgabe ist eine Polymerkomposition enthaltend 3 bis 95 Gew.-% eines Copolymers H sowie 3 bis 95 Gew.-% eines Copolymers K, wobei die Copolymere H und K jeweils Polyethermakromonomerstruktureinheiten und Säuremonomerstruktureinheiten aufweisen, welche in den Copolymeren H und K jeweils in einem molaren Verhältnis von 1 : 20 bis 1 : 1 vorliegen, sowie mindestens 20 Mol-% sämtlicher Struktureinheiten des Copolymers H und mindestens 25 Mol-% sämtlicher Struktureinheiten des Copolymers K jeweils in Form von Säuremonomerstruktureinheiten vorliegen, die Polyethermakromonomerstruktureinheiten der Copolymere H und K jeweils mindestens 5 Ether-Sauerstoffatome enthaltende Seitenketten aufweisen, die Anzahl der Ether-Sauerstoffatome pro Seitenkette der Polyethermakromonomerstruktureinheiten der Copolymere H und K jeweils derart variieren, dass die entsprechenden Häufigkeitsverteilungsdiagramme, in welchen jeweils auf den Abszissen die Anzahl der Ether-Sauerstoffatome pro Seitenkette einer Polyethermakromonomerstruktureinheit und auf den Ordinaten die jeweils zugehörigen Häufigkeiten für die Copolymere H oder K aufgetragen sind, jeweils mindestens 2 Maxima enthalten, deren Abszissenwerte jeweils mehr als 7 Ether-Sauerstoffatome voneinander abweichen, wobei sich die Häufigkeitsverteilungsdiagramme der Copolymere H und K insofern voneinander unterscheiden, dass der Abszissenwert von mindestens einem Maximum des Copolymers H jeweils um mehr als 5 Ether-Sauerstoffatome von den Abszissenwerten sämtlicher Maxima des Copolymers K abweicht und/oder dass die arithmetisch mittlere Zahl der Ether-Sauerstoffatome der Polyethermakromonomerstruktureinheiten der Copolymere H und K um mehr als 5 Ether-Sauerstoffatome voneinander abweichen.

Die Säuremonomerstruktureinheiten werden durch Einpolymerisation der entsprechenden Säuremonomere erzeugt. In diesem Zusammenhang sollen als Säuremonomer radikalisch copolymerisierbare, mindestens eine Kohlenstoffdoppelbindung aufweisende Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisende Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Acrylester wie Ethylacrylat). Die Polyethermakromonomerstruktureinheiten werden durch Einpolymerisation der entsprechenden Polyethermakromonomere erzeugt. In diesem Zusammenhang sind Polyethermakromonomere im Sinne der vorliegenden Erfindung radikalisch copolymerisierbare Verbindungen mit mindestens einer Kohlenstoffdoppelbindung, welche Ether-Sauerstoffatome aufweisen. Die in dem Copolymer enthaltenen Polyethermakromonomerstruktureinheiten weisen somit jeweils mindestens eine Seitenkette auf, die Ether-Sauerstoffatome enthält.

Allgemein kann gesagt werden, dass die Wirkungsweise von relevanten Polyethermakromonomerstruktureinheiten sowie Säurestruktureinheiten aufweisenden Copolymeren von deren strukturellen Parametern bestimmt wird. Das Wirkungsspektrum von entsprechenden Hochleistungscopolymeren deckt die gesamte Bandbreite von extremer Wasserreduktion bis zu extremem Slumperhalt ab, wobei strukturelle Parameter, die für Wasserreduktion sorgen, einem guten Slumperhalt entgegenstehen. So ist neben der Ladungsmenge pro Masseneinheit auch die Länge der Seitenketten, z.B. bezüglich der Wasserreduktionsfähigkeit, ausschlaggebend. Die Dosierung der relevanten Fließmittelcopolymere wird üblicherweise in % des Zementgewichts einer zementären Mischung - also massenbasiert - vorgenommen. In aller Regel ist für die Wirkungsweise nicht nur die applizierte Masse, sondern auch die Anzahl der Wirkstoffmoleküle maßgeblich. Lange Seitenketten verfügen jedoch über eine hohe Masse, was einer möglichst großen Anzahl an Copolymer-Molekülen pro Masse zuwiderläuft. Durch gezielten Einbau von kurzen Seitenketten neben langen Seitenketten kann die molare Masse der Copolymere verringert werden, ohne jedoch den auch durch die langen Seitenketten hervorgerufenen Dispergiereffekt negativ zu beeinflussen. Somit ist es häufig zweckmäßig, kurze und lange Polyetherseitenketten gleichzeitig im Copolymer-Molekül einzubauen und zwar nach dem Prinzip "jeweils so viele der längeren Seitenketten wie nötig, aber so wenige wie möglich". Copolymerfließmittel können hinsichtlich ihrer Masseneffizienz auf diese Weise optimiert werden. Diese Optimierung kann separat für beide Extreme des Wirkspektrums (Wasserreduktion, Slumpretention) durchgeführt werden. In Anwendungen, in denen sowohl Wasserreduktion als auch Konsistenzhaltung gefordert sind, kann eine physikalische Mischung dieser jeweils massenoptimierten Fließmittelcopolymere vorteilhaft gegenüber einem einzelnen, speziell für eine Anwendung optimierten Fließmittelcopolymer zum Einsatz kommen. Vorteile sind eine größere Robustheit gegenüber Zementqualität (Alkali- und Sulfatgehalt), Temperaturschwankungen, bzw. die Möglichkeit der leichten Anpassung der Mischung. Zusammenfassend kann gesagt werden, dass die erfindungsgemäße Polymerkomposition ein besonders wirtschaftliches und qualitativ hochwertiges Dispergiermittel bzw. Fließmittel darstellt.

Meist enthält die erfindungsgemäße Polymerkomposition 10 bis 85 Gew.-% des Copolymers H sowie 10 bis 85 Gew.-% des Copolymers K.

Bevorzugt liegen mindestens 50 Mol-% sämtlicher Struktureinheiten des Copolymers H und mindestens 50 Mol-% sämtlicher Struktureinheiten des Copolymers K jeweils in Form von Säuremonomerstruktureinheiten vor.

Meist variieren die Anzahl der Ether-Sauerstoffatome pro Seitenkette der Polyethermakromonomerstruktureinheiten der Copolymere H und K jeweils derart, dass die entsprechenden Häufigkeitsverteilungsdiagramme, in welchen jeweils auf den Abszissen die Anzahl der Ether-Sauerstoffatome pro Seitenkette einer Polyethermakromonomerstruktureinheit und auf den Ordinaten die jeweils zugehörigen Häufigkeiten für die Copolymere H oder K aufgetragen sind, jeweils mindestens 2 Maxima enthalten, deren Abszissenwerte jeweils mehr als 10 Ether-Sauerstoffatome voneinander abweichen.

Oft variieren die Anzahl der Ether-Sauerstoffatome pro Seitenkette der Polyethermakromonomerstruktureinheiten der Copolymere H und K jeweils derart, dass die entsprechenden Häufigkeitsverteilungsdiagramme, in welchen jeweils auf den Abszissen die Anzahl der Ether-Sauerstoffatome pro Seitenkette einer Polyethermakromonomerstruktureinheit und auf den Ordinaten die jeweils zugehörigen Häufigkeiten für die Copolymere H oder K aufgetragen sind, jeweils mindestens 2 Maxima enthalten, deren Abszissenwerte jeweils mehr als 10 Ether-Sauerstoffatome voneinander abweichen, wobei sich die Häufigkeitsverteilungsdiagramme der Copolymere H und K insofern voneinander unterscheiden, dass der Abszissenwert von mindestens einem Maximum des Copolymers H jeweils um mehr als 10 Ether-Sauerstoffatome von den Abszissenwerten sämtlicher Maxima des Copolymers K abweicht.

In der Regel liegen die Säuremonomerstruktureinheiten der Copolymere H und K jeweils gemäß einer der allgemeinen Formeln (la), (Ib), (Ic) und/oder (Id) vor 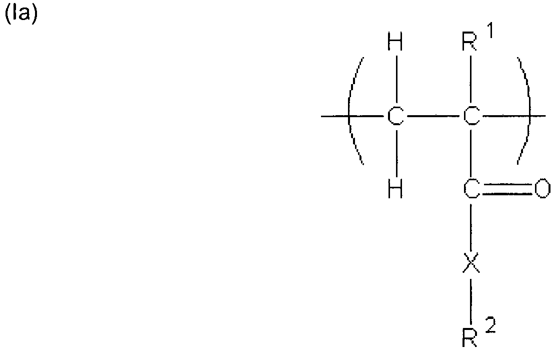 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 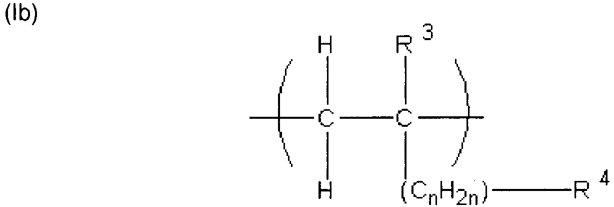 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 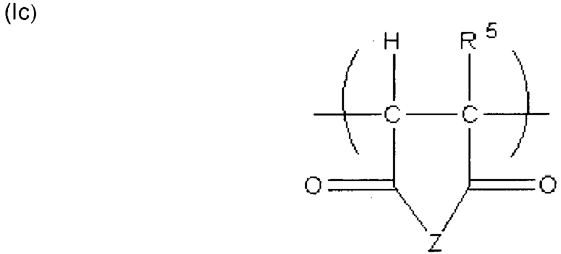 mit
R⁵ gleich oder verschieden sowie repräsentiert durch H und/oder eine unverzweigte oder verzweigte C₁ - C₄ Alkylgruppe;

Z gleich oder verschieden sowie repräsentiert durch O und/oder NH; 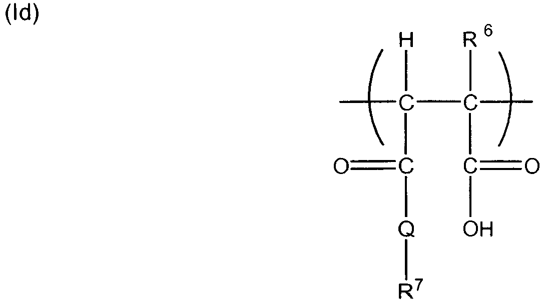 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Häufig werden die Säuremonomerstruktureinheiten der Copolymere H und K jeweils durch Einpolymerisation der Säuremonomere Methacrylsäure, Acrylsäure, Maleinsäure, Maleinsäureanhydrid und/oder Halbester der Maleinsäure erzeugt.

Bevorzugt liegen die Polyethermakromonomerstruktureinheiten der Copolymere H und K jeweils gemäß einer der allgemeinen Formeln (IIa), (IIb) und/oder (IIc) vor 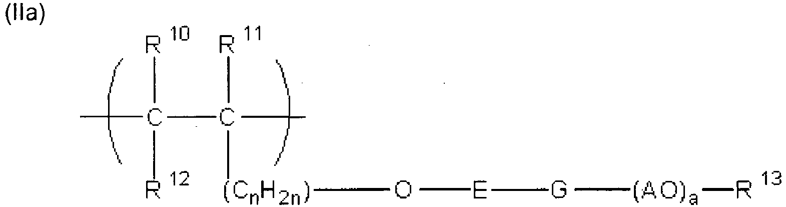 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 5 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 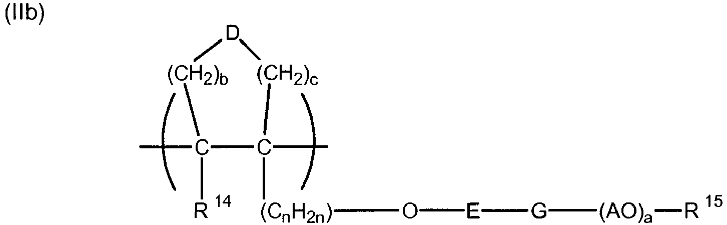 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 5 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 o-der 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 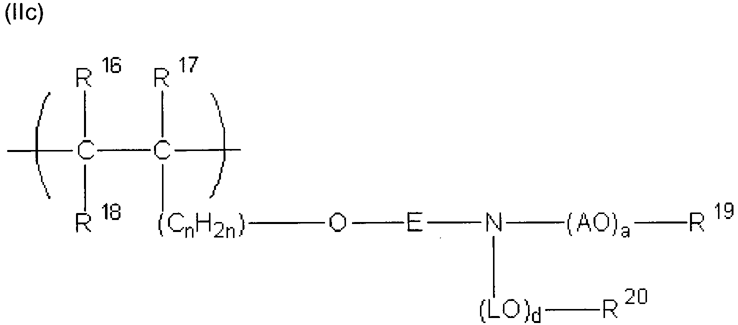 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 5 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Häufig werden die Polyethermakromonomerstruktureinheiten der Copolymere H und K jeweils durch Einpolymerisation der Polyethermakromonomere alkoxylierter Hydroxy-butylvinylether und/oder alkoxylierter Diethylenglykolmonovinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 6 bis 300 erzeugt.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung oder Ethoxylierung und Propoxylierung der entsprechenden Monomeralkohole).

Die Copolymere H und K können jeweils gleiche oder verschiedene Typen von Polyethermakromonomerstruktureinheiten und/oder Säuremonomerstruktureinheiten aufweisen.

In der Regel werden jeweils mindestens 45 Mol-%, bevorzugt mindestens 80 Mol-% aller Struktureinheiten der Copolymere H und K durch Einpolymerisieren von Säuremonomer und Polyethermakromonomer erzeugt.

Die Erfindung betrifft auch ein Dispergiermittel, welches mindestens 30 Gew.-% Wasser sowie mindestens 10 Gew.-% der vorstehend beschriebenen Polymerkomposition enthält. Bevorzugt liegt das Dispergiermittel in Form einer wässrigen Lösung vor.

Weiterhin betrifft die vorliegende Erfindung auch ein Verfahren zur Herstellung der erfindungsgemäßen Polymerkomposition oder des erfindungsgemäßen Dispergiermittels, wobei die Copolymere H und K jeweils getrennt voneinander in wässriger Lösung hergestellt werden und anschließend die getrennt hergestellten Copolymere oder die getrennt hergestellten wässrigen Lösungen miteinander vermischt werden.

Üblicherweise werden Säuremonomer und Polyethermakromonomer durch radikalische Polymerisation unter Verwendung eines Peroxid enthaltenden Redoxinitiatorsystems in wässrige Lösung umgesetzt, wobei die Temperatur der wässrigen Lösung während der Polymerisation 10 bis 45 °C sowie der pH-Wert 3,5 bis 6,5 beträgt.

Die Erfindung betrifft schließlich auch die Verwendung der erfindungsgemäßen Polymerkomposition als Dispergiermittel für hydraulische Bindemittel und/oder für latenthydraulische Bindemittel. Typischerweise liegt das hydraulische Bindemittel als Zement, Kalk, Gips, Halbhydrat oder Anhydrit oder aus Mischungen dieser Komponenten, bevorzugt jedoch als Zement vor. Das latenthydraulische Bindemittel liegt normalerweise als Flugasche, Trass oder Hochofenschlacke vor. Die erfindungsgemäßen Polymerkomposition kann beispielsweise auch (insbesondere in entwässerter Form) als Additiv für die Zementproduktion (Mahlhilfe und "Wasserreduzierer" für reine Portlandzemente bzw. Kompositzemente) eingesetzt werden.

Nachstehend soll die Erfindung anhand von Ausführungsbeispielen in Kombination mit der Zeichnung näher erläutert werden.

Die Zeichnung zeigt:

In Figur 1 ein in schematischer Weise die Häufigkeit der Anzahl der Ethersauerstoffatome der Seitenketten aufzeigendes Diagramm, welches die erfindungsgemäße Polymerkomposition gemäß Anwendungsbeispiel betrifft und

in Figur 2 ein das Ausbreitmaß gegenüber der Zeit darstellendes Diagramm, in welchem eine erfindungsgemäße Polymerkomposition gemäß Anwendungsbeispiel mit anderen Polymerkompositionen verglichen wird.

### Synthesebeispiel 1 Copolymer H der erfindungemäßen Polymerkomposition

In einem Glasreaktor, ausgestattet mit Rührer, pH-Elektrode und mehreren Zulaufeinrichtungen, wurden 227 g deionisiertes Wasser und 250 g Vinyloxybutylpolyethylenglykol-1100 (Anlagerungsprodukt aus 22 Mol Ethylenoxid an Hydroxybutylmonovinylether) und 113,6 g Vinyloxybutylpolyethylenglykol-500 (Anlagerungsprodukt aus 9 Mol Ethylenoxid an Hydroxybutylmonovinylether) vorgelegt und auf eine Polymerisationsstarttemperatur von 12 °C gekühlt (Vorlage).

In einem separaten Zulaufgefäß wurden 39,3 g Acrylsäure und 29,58 g Hydroxypropylacrylat mit 206,65 g deionisiertem Wasser homogen vermischt. Mit 23,27 g einer 40 %igen Kaliumhydroxydlösung wurde die Lösung unter Kühlen auf eine Temperatur von 20 °C und einen pH-Wert von 4,0 eingestellt. Anschließend wurden 2,88 g 3-Mercaptopropionsäure als Molekulargewichtsregler zugegeben (Lösung A).

Parallel wurde eine zweite Lösung bestehend aus 2,07 g einer Mischung aus dem Dinatriumsalz der 2-Hydroxy-2-sulfinatoessigsäure, dem Dinatriumsalz der 2-Hydroxy-2-sulfonatoessigsäure und Natriumsulfit (Brüggolit FF6 Fa. Brüggemann GmbH) und 66,93 g Wasser hergestellt (Lösung B).

Unter Rühren und Kühlen wurden 89,6 g der Lösung A sowie anschließend 5,9 g einer 20 %igen wässrigen Natronlauge sowie 1,55 g 3-Mercaptopropionsäure als Molekulargewichtsregler zur Vorlage gegeben.

Danach wurden nacheinander 0,085 g Eisen-II-sulfat-Heptahydrat, sowie 5,22 g Wasserstoffperoxid (30 % in Wasser) zum Vorlagegemisch gegeben. Zeitgleich wurde mit der Zugabe von Lösung A und Lösung B zur gerührten Vorlage begonnen.

Die Zugabegeschwindigkeit der restlichen Lösung A ist dem folgenden Dosierprofil zu entnehmen. Die Zugabegeschwindigkeit der Lösung B beträgt 33,5 g/h für 45 min, wird dann auf 205 g/h erhöht und dosiert bis die gesamte Lösung im Reaktor ist.
Während der Reaktionszeit werden schrittweise 18 g einer 20 %igen wässrigen Natronlauge zugegeben.

| | | | | | | | | | | | | | | | | |
|---|---|---|---|---|---|---|---|---|---|---|---|---|---|---|---|---|
| t (min) | 0 | 1,5 | 3 | 6 | 9 | 12 | 15 | 18 | 21 | 24 | 27 | 30 | 33 | 36 | 39 | 45 |
| Lösung A (g/h) | 143 | 287 | 502 | 600 | 558 | 502 | 430 | 343 | 272 | 212 | 170 | 127 | 103 | 72 | 63 | 0 |

Nach vollständiger Zugabe der Lösungen A und B wurde kein Peroxyd mehr im Reaktionsgefäß gefunden.

Anschließend wurde die erhaltene Polymerlösung mit etwa 42 g einer 20 %igen Natriumhydroxid-Lösung auf einen pH-Wert von 6,5 eingestellt.

Das erhaltene Copolymer fiel in einer leicht gelblich gefärbten Lösung an, die einen Feststoffgehalt von 44,3 % aufwies. Das mittlere Molekulargewicht des Copolymers lag bei Mw 24000 g/Mol; Umsatz laut GPC: 95 %;

### Synthesebeispiel 2 Copolymer K der erfindungsgemäßen Polymerkomposition

In einem Glasreaktor, ausgestattet mit Rührer, pH-Elektrode und mehreren Zulaufeinrichtungen wurden 423,4 g deionisiertes Wasser und 16,65 g Vinyloxybutylpolyethylenglykol-1100 (Anlagerungsprodukt aus 22 Mol Ethylenoxid an Hydroxybutylmonovinylether) und 351,25 g Vinyloxybutylpolyethylenglykol-5800 (Anlagerungsprodukt aus 129 Mol Ethylenoxid an Hydroxybutylmonovinylether) vorgelegt und auf eine Polymerisationsstarttemperatur von 15 °C gekühlt (Vorlage).

In einem separaten Zulaufgefäß wurden 19,64 g Acrylsäure und 15,76 g Hydroxypropylacrylat mit 106,20 g deionisiertem Wasser homogen vermischt. Mit 5,44 g einer 40 %igen Kaliumhydroxydlösung wurde die Lösung unter Kühlen auf eine Temperatur von 20 °C und einen pH-Wert von 3,5 eingestellt. Anschließend wurden 2,52 g 3-Mercaptopropionsäure als Molekulargewichtsregler zugegeben (Lösung A).

Parallel wurde eine zweite Lösung bestehend aus 1,68 g einer Mischung aus dem Dinatriumsalz der 2-Hydroxy-2-sulfinatoessigsäure, dem Dinatriumsalz der 2-Hydroxy-2-sulfonatoessigsäure und Natriumsulfit (Brüggolit FF6 Fa. Brüggemann GmbH) und 26,32 g Wasser hergestellt (Lösung B).

Unter Rühren und Kühlen wurden 73,5 g der Lösung A sowie anschließend 11,0 g einer 20 %igen wässrigen Natronlauge sowie 0,28 g 3-Mercaptopropionsäure als Molekulargewichtsregler zur Vorlage gegeben.

Danach wurden nacheinander 0,1488 g Eisen-II-sulfat-Heptahydrat, sowie 2,53 g Wasserstoffperoxid (30 % in Wasser) zum Vorlagegemisch gegeben. Zeitgleich wurde mit der Zugabe von Lösung A und Lösung B zur gerührten Vorlage begonnen.

Die Zugabegeschwindigkeit der restlichen Lösung A ist dem folgenden Dosierprofil zu entnehmen. Die Zugabegeschwindigkeit der Lösung B beträgt 36,9 g/h für 30 min, wird dann auf 89 g/h erhöht und dosiert bis die gesamte Lösung im Reaktor ist.
Während der Reaktionszeit werden schrittweise 1,6 g einer 20 %igen wässrigen Natronlauge zugegeben.

| | | | | | | | | | | | | | |
|---|---|---|---|---|---|---|---|---|---|---|---|---|---|
| t (min) | 0 | 2 | 4 | 6 | 8 | 10 | 12 | 14 | 16 | 18 | 22 | 26 | 30 |
| Lösung A (g/h) | 222 | 247 | 257 | 257 | 247 | 222 | 182 | 149 | 119 | 92 | 56,9 | 35 | 0 |

Nach vollständiger Zugabe der Lösungen A und B wurde kein Peroxyd mehr im Reaktionsgefäß gefunden.

Anschließend wurde die erhaltene Polymerlösung mit etwa 30 g einer 20 %igen Natriumhydroxid-Lösung auf einen pH-Wert von 6,5 eingestellt.

Das erhaltene Copolymer fiel in einer leicht gelblich gefärbten Lösung an, die einen Feststoffgehalt von 40,6 % aufwies. Das mittlere Molekulargewicht des Copolymers lag bei Mw 73000 g/Mol; Umsatz laut GPC: 87 %;

### Synthesebeispiel 3 (zum Vergleich - betrifft nicht erfindungsgemäße Polymerkomopostion)

### "Chemische Mischung"

### entsprechend 0,7 Teilen Copolymer K und 0,3 Teilen Copolymer H

In einem Glasreaktor, ausgestattet mit Rührer, pH-Elektrode und mehreren Zulaufeinrichtungen, wurden 59,64 g deionisiertes Wasser und 15,95 g Vinyloxybutylpolyethylenglykol-1100 (Anlagerungsprodukt aus 22 Mol Ethylenoxid an Hydroxybutylmonovinylether und 162,40 g Vinyloxybutylpolyethylenglykol-5800 (Anlagerungsprodukt aus 129 Mol Ethylenoxid an Hydroxybutylmonovinylether) und 3,75 g Vinyloxybutylpolyethylenglykol-500 (Anlagerungsprodukt aus 10 Mol Ethylenoxid an Hydroxybutylmonovinylether) vorgelegt und auf eine Polymerisationsstarttemperatur von 15 °C gekühlt (Vorlage).

In einem separaten Zulaufgefäß wurden 10,38 g Acrylsäure und 8,26 g Hydroxypropylacrylat mit 67,2 g deionisiertem Wasser homogen vermischt. Mit 3,05 g einer 40 %igen Kaliumhydroxydlösung wurde die Lösung unter Kühlen auf eine Temperatur von 20 °C und einen pH-Wert von 3,5 eingestellt. (Lösung A).

Parallel wurde eine zweite Lösung bestehend aus 3 g einer Mischung aus dem Dinatriumsalz der 2-Hydroxy-2-sulfinatoessigsäure, dem Dinatriumsalz der 2-Hydroxy-2-sulfonatoessigsäure und Natriumsulfit (Brüggolit FF6 Fa. Brüggemann GmbH) und 47 g Wasser hergestellt (Lösung B).

Unter Rühren und Kühlen wurden 44,75 g der Lösung A sowie anschließend 2,6 g einer 20 %igen wässrigen Natronlauge sowie 0,16 g 3-Mercaptopropionsäure als Molekulargewichtsregler zur Vorlage gegeben. Der verbliebene Rest der Lösung A wurde mit 1,44 g 3-Mercaptopropionsäure versetzt.

Nach Erreichen des pH-Wertes von 5,3 in der Vorlage wurden nacheinander 0,0875 g Eisen-II-sulfat-Heptahydrat, sowie 1,49 g Wasserstoffperoxid (30 % in Wasser) zum Vorlagegemisch gegeben. Zeitgleich wurde mit der Zugabe von Lösung A und Lösung B zur gerührten Vorlage begonnen.

Die Zugabegeschwindigkeit der restlichen Lösung A ist dem folgenden Dosierprofil zu entnehmen. Die Zugabegeschwindigkeit der Lösung B beträgt 20,8 g/h für 30 min, wird dann auf 100 g/h erhöht und dosiert bis die gesamte Lösung im Reaktor ist. Während der Reaktionszeit werden schrittweise 3,9 g einer 20 %igen wässrigen Natronlauge zugegeben.

| | | | | | | | | | | | | | |
|---|---|---|---|---|---|---|---|---|---|---|---|---|---|
| t(min) | 0 | 2 | 4 | 6 | 8 | 10 | 12 | 14 | 16 | 18 | 22 | 26 | 30 |
| Lösung A (g/h) | 140 | 155 | 162 | 162 | 155 | 140 | 114 | 94 | 75 | 58 | 36 | 22 | 0 |

Nach vollständiger Zugabe der Lösungen A und B wurde kein Peroxyd mehr im Reaktionsgefäß gefunden.

Anschließend wurde die erhaltene Polymerlösung mit etwa 15 g einer 20 %igen Natriumhydroxid-Lösung auf einen pH-Wert von 6,5 eingestellt.

Das erhaltene Copolymer fiel in einer leicht gelblich gefärbten Lösung an, die einen Feststoffgehalt von 41,5 % aufwies. Das mittlere Molekulargewicht des Copolymers lag bei Mw 57000 g/Mol; Umsatz laut GPC: 89%;

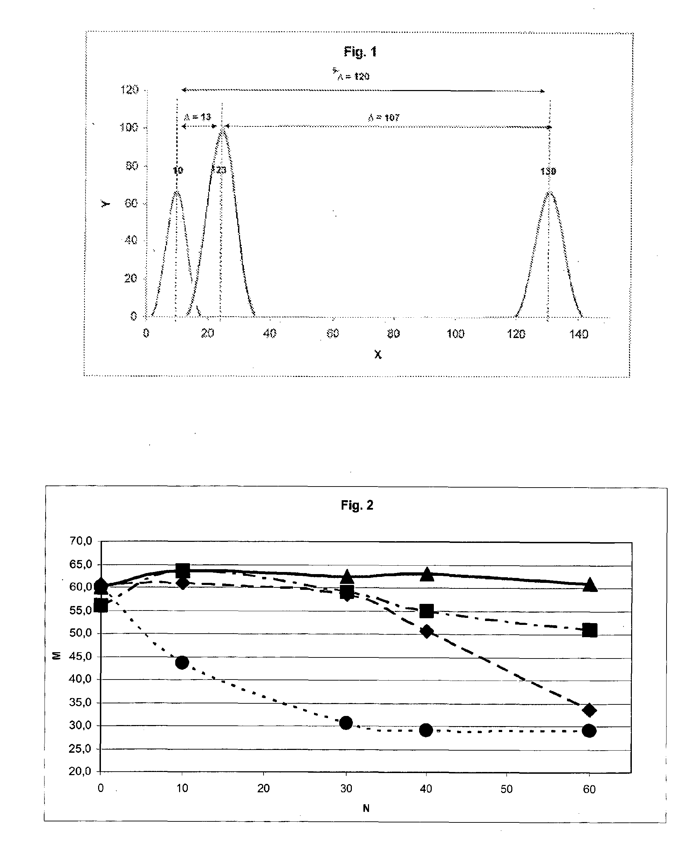

Zur Herstellung der erfindungsgemäßen Polymerkomposition (für das nachfolgend beschriebene erfindungsgemäße Anwendungsbeispiel der, physikalischen Mischung') wurden 129,21 g der Polymerlösung des Copolymers K (Synthesebeispiel 2) mit 50 g der Polymerlösung des Copolymers H (Synthesebeispiel 1) vermischt, was bezogen auf den jeweiligen Polymerfeststoff der Copolymere H und K einem Mischungsverhältnis von 70 : 30 entspricht. Das schematische Diagramm gemäß Figur 1 zeigt auf der Abszisse (X) die Anzahl der Ether-Sauerstoffatome pro Seitenkette der Polyethermakromonomerstruktureinheiten (aller Copolymere H und K) der auf diese Weise hergestellten erfindungsgemäßen Polymerkomposition und auf der Ordinate (Y) die jeweils zugehörigen Häufigkeiten. Die größte Häufigkeit ergibt sich bei einer mittleren Ether-Sauerstoffanzahl von 23, da sich hier die Häufigkeiten der Copolymere H und K entsprechend des in beiden Synthesebeispielen 1 und 2 verwendeten Rohstoffs Vinyloxybutylpolyethylenglykol-1100 (Anlagerungsprodukt aus 22 Mol Ethylenoxid an Hydroxybutylmonovinylether) addieren. Die mittlere Anzahl von 23 ergibt sich aus der Berücksichtigung eines weiteren Ethersauerstoffatoms aus der vinylischen "Kopfgruppe" des Makromonomerbausteins. Entsprechendes gilt für die 2 anderen verwendeten Vinyloxybutylpolyethylenglykole. Figur 1 zeigt zudem auch die Abstände der jeweiligen Verteilungsmaxima der physikalischen Mischung der Copolymere H und K. Die wiedergegebene Verteilung der Ethersauerstoffatome entsprechend einer " Glockenkurve" ist lediglich schematisch (die tatsächliche Breite der Verteilung kann abweichen).

Alle in den nachstehenden Anwendungsbeispielen getesteten Polymermischungen wurden mit geringen Mengen eines konventionellen Entschäumers zur Steuerung des Luftporengehalts versetzt.

### Anwendungsbeispiele:

Ausbreitmaß nach DIN 12350-5, Prüfung von Frischbeton,
400 kg CEM I 52,5 R Mergelstetten, w/z = 0,36, dos je 0,21 %

Die Ergebnisse der Anwendungsbeispiele sind in dem Diagramm der Figur 2 dargestellt, in welchem auf der Abszisse (N) die Zeit in Minuten und auf der Ordinate (M) das Ausbreitmaß in cm aufgetragen ist, wobei Kreissymbole für einen Standardverflüssiger (ohne gemischte Seitenketten), Rautensymbole für Copolymer H als optimierte Verflüssigervariante, Dreiecksymbole für die erfindungsgemäße physikalische Mischung aus Copolymer H und K, sowie Quadratsymbole für die Mischung gemäß Synthesebeispiel 3 stehen.

Copolymer H (Rautensymbole) als optimierte Variante eines Standard-Verflüssigers (Glenium ACE 30 der BASF, welches keine gemischten Seitenketten enthält, Kreissymbole) zeigt eine besonders gute Verarbeitbarkeit bei entsprechender Dosierung von 0,21 % (Feststoff Fließmittel bezogen auf Zementgewicht der Mischung) während der ersten 40 min. Im Vergleich dazu zeigt die erfindungsgemäße physikalische Mischung aus Copolymer H und Copolymer K im Mischungsverhältnis 0,7 : 0,3 bezogen auf den Polymergehalt der Lösungen eine nochmals deutlich gesteigerte Performance (Dreiecksymbole) auch bis zu 60 min. Die Mischung gemäß Synthesebeispiel 3 (Quadratsymbole) ist der erfindungsgemäßen Mischung (Dreiecksymbole) unterlegen, da sie zum einen deutlich stärker nachverflüssigt (Anstieg des Ausbreitmaßes von 56 auf 63,5 cm während der ersten 10 min.) und zum anderen nicht vergleichbar gut die Verarbeitbarkeit über die Zeit gewährleistet (bereits nach 40 Minuten liegt das Ausbreitmaß bei 55 cm, wohingegen die erfindungsgemäße noch nach 60 Minuten ein Ausbreitmaß von 61 cm aufweist).

## Patentansprüche

1. Polymerkomposition enthaltend 3 bis 95 Gew.-% eines Copolymers H sowie 3 bis 95 Gew.-% eines Copolymers K, wobei die Copolymere H und K jeweils Polyethermakromonomerstruktureinheiten und Säuremonomerstruktureinheiten aufweisen, welche in den Copolymeren H und K jeweils in einem molaren Verhältnis von 1 : 20 bis 1 : 1 vorliegen, sowie mindestens 20 Mol-% sämtlicher Struktureinheiten des Copolymers H und mindestens 25 Mol-% sämtlicher Struktureinheiten des Copolymers K jeweils in Form von Säuremonomerstruktureinheiten vorliegen, die Polyethermakromonomerstruktureinheiten der Copolymere H und K jeweils mindestens 5 Ether-Sauerstoffatome enthaltende Seitenketten aufweisen, die Anzahl der Ether-Sauerstoffatome pro Seitenkette der Polyethermakromonomerstruktureinheiten der Copolymere H und K jeweils derart variieren, dass die entsprechenden Häufigkeitsverteilungsdiagramme, in welchen jeweils auf den Abszissen die Anzahl der Ether-Sauerstoffatome pro Seitenkette einer Polyethermakromonomerstruktureinheit und auf den Ordinaten die jeweils zugehörigen Häufigkeiten für die Copolymere H oder K aufgetragen sind, jeweils mindestens 2 Maxima enthalten, deren Abszissenwerte jeweils mehr als 7 Ether-Sauerstoffatome voneinander abweichen, wobei sich die Häufigkeitsverteilungsdiagramme der Copolymere H und K insofern voneinander unterscheiden, dass der Abszissenwert von mindestens einem Maximum des Copolymers H jeweils um mehr als 5 Ether-Sauerstoffatome von den Abszissenwerten sämtlicher Maxima des Copolymers K abweicht und/oder dass die arithmetisch mittlere Zahl der Ether-Sauerstoffatome der Polyethermakromonomerstruktureinheiten der Copolymere H und K um mehr als 5 Ether-Sauerstoffatome voneinander abweichen.

2. Polymerkomposition nach Anspruch 1, enthaltend 10 bis 85 Gew.-% des Copolymers H sowie 10 bis 85 Gew.-% des Copolymers K.

3. Polymerkomposition nach Anspruch 1 oder 2, **dadurch gekennzeichnet, dass** mindestens 50 Mol-% sämtlicher Struktureinheiten des Copolymers H und mindestens 50 Mol-% sämtlicher Struktureinheiten des Copolymers K jeweils in Form von Säuremonomerstruktureinheiten vorliegen.

4. Polymerkomposition nach einem der Ansprüche 1 bis 3, **dadurch gekennzeichnet, dass** die Anzahl der Ether-Sauerstoffatome pro Seitenkette der Polyethermakromonomerstruktureinheiten der Copolymere H und K jeweils derart variieren, dass die entsprechende Häufigkeitsverteilungsdiagramme, in welchen jeweils auf den Abszissen die Anzahl der Ether-Sauerstoffatome pro Seitenkette einer Polyethermakromonomerstruktureinheit und auf den Ordinaten die jeweils zugehörigen Häufigkeiten für die Copolymere H oder K aufgetragen sind, jeweils mindestens 2 Maxima enthalten, deren Abszissenwerte jeweils mehr als 10 Ether-Sauerstoffatome voneinander abweichen.

5. Polymerkomposition nach einem der Ansprüche 1 bis 4, **dadurch gekennzeichnet, dass** die Anzahl der Ether-Sauerstoffatome pro Seitenkette der Polyethermakromonomerstruktureinheiten der Copolymere H und K jeweils derart variieren, dass die entsprechenden Häufigkeitsverteilungsdiagramme, in welchen jeweils auf den Abszissen die Anzahl der Ether-Sauerstoffatome pro Seitenkette einer Polyethermakromonomerstruktureinheit und auf den Ordinaten die jeweils zugehörigen Häufigkeiten für die Copolymere H oder K aufgetragen sind, jeweils mindestens 2 Maxima enthalten, deren Abszissenwerte jeweils mehr als 10 Ether-Sauerstoffatome voneinander abweichen, wobei sich die Häufigkeitsverteilungsdiagramme der Copolymere H und K insofern voneinander unterscheiden, dass der Abszissenwert von mindestens einem Maximum des Copolymers H jeweils um mehr als 10 Ether-Sauerstoffatome von den Abszissenwerten sämtlicher Maxima des Copolymers K abweicht.

6. Polymerkomposition nach einem der Ansprüche 1 bis 5, **dadurch gekennzeichnet, dass** die Säuremonomerstruktureinheiten der Copolymere H und K jeweils gemäß einer der allgemeinen Formeln (la), (Ib), (Ic) und/oder (Id) vorliegen 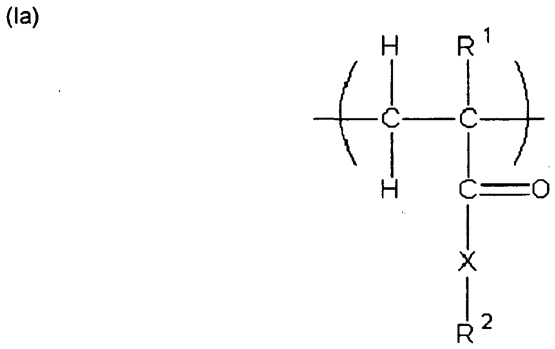 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 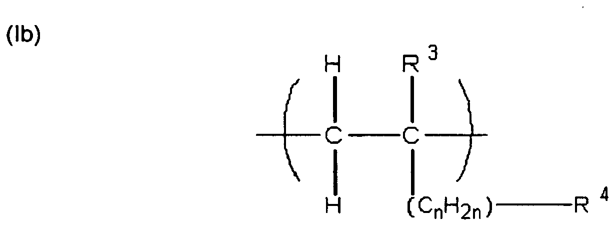 mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 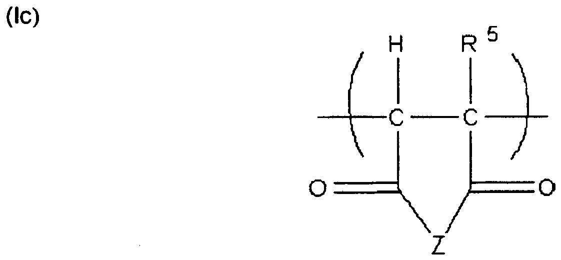 mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 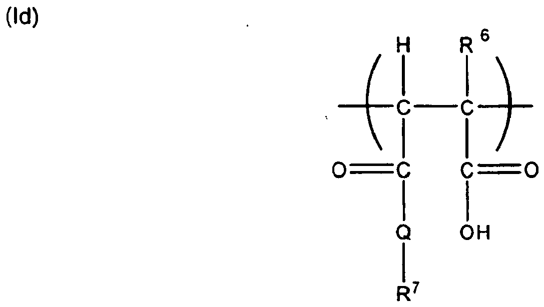 mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= O, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

7. Polymerkomposition nach einem der Ansprüche 1 bis 6, **dadurch gekennzeichnet, dass** die Säuremonomerstruktureinheiten der Copolymere H und K jeweils durch Einpolymerisation der Säuremonomere Methacrylsäure, Acrylsäure, Maleinsäure, Maleinsäureanhydrid und/oder Halbester der Maleinsäure erzeugt werden.

8. Polymerkomposition nach einem der Ansprüche 1 bis 7, **dadurch gekennzeichnet, dass** die Polyethermakromonomerstruktureinheiten der Copolymere H und K jeweils gemäß einer der allgemeinen Formeln (IIa), (IIb) und/oder (IIc) vorliegen 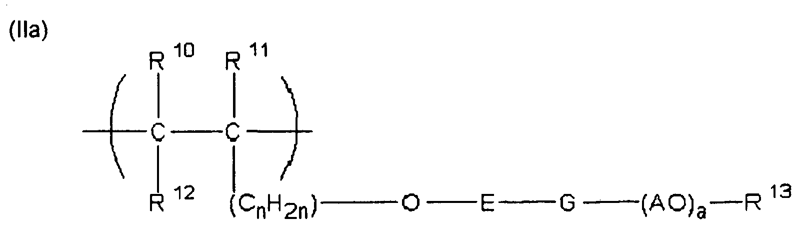 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5, bevorzugt x = 2 und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 5 bis 350, bevorzugt 10-200;
R¹³ gleich oder verschieden sowie repräsentiert durch H, eine unverzweigte oder verzweigte C₁ - C₄ Alkylgruppe, CO-NH₂, und/oder COCH₃; 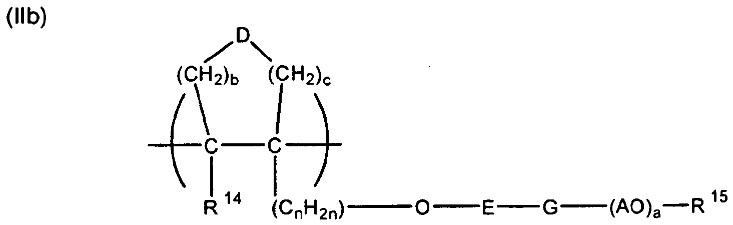 mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 5 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 o-der 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 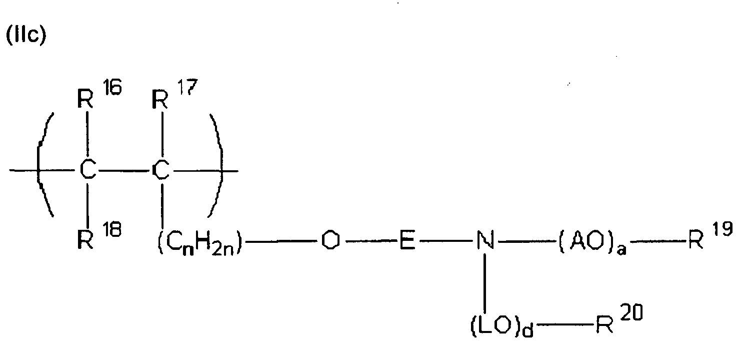 mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄ ;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 5 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

9. Polymerkomposition nach einem der Ansprüche 1 bis 8, **dadurch gekennzeichnet, dass** die Polyethermakromonomerstruktureinheiten der Copolymere H und K jeweils durch Einpolymerisation der Polyethermakromonomere alkoxylierter Hydroxybutylvinylether und/oder alkoxyliertes Isoprenol und/oder alkoxylierter (Meth)allylalkohol und/oder vinyliertes Methylpolyalkylenglykol mit bevorzugt jeweils einer arithmetisch mittleren Zahl an Oxyalkylengruppen von 6 bis 300 erzeugt werden.

10. Polymerkomposition nach einem der Ansprüche 1 bis 9, **dadurch gekennzeichnet, dass** die Copolymere H und K jeweils die gleichen oder verschiedene Typen von Polyethermakromonomerstruktureinheiten und/oder Säuremonomerstruktureinheiten aufweisen.

11. Polymerkomposition nach einem der Ansprüche 1, 2 oder 4 bis 10, **dadurch gekennzeichnet, dass** jeweils mindestens 45 Mol-%, bevorzugt mindestens 80 Mol-% aller Struktureinheiten der Copolymere H und K durch Einpolymerisieren von Säuremonomer und Polyethermakromonomer erzeugt werden.

12. Dispergiermittel enthaltend mindestens 30 Gew.-% Wasser sowie mindestens 10 Gew.-% der Polymerkomposition gemäß einem der Ansprüche 1 bis 11.

13. Dispergiermittel nach Anspruch 12, welches in Form einer wässrigen Lösung vorliegt.

14. Verfahren zur Herstellung einer Polymerkomposition gemäß einem der Ansprüche 1 bis 11 oder eines Dispergiermittels gemäß Anspruch 12 oder 13, **dadurch gekennzeichnet, dass** die Copolymere H und K jeweils getrennt voneinander in wässriger Lösung hergestellt werden und anschließend die getrennt hergestellten Copolymere oder die getrennt hergestellten wässrigen Lösungen miteinander vermischt werden.

15. Verfahren nach Anspruch 14, **dadurch gekennzeichnet, dass** Säuremonomer und Polyethermakromonomer durch radikalische Polymerisation unter Verwendung eines Peroxid enthaltenden Redoxinitiatorsystems in wässrigen Lösung umgesetzt werden, wobei die Temperatur der wässrigen Lösung während der Polymerisation 10 bis 45 °C sowie der pH-Wert 3,5 bis 6,5 beträgt.

16. Verwendung einer Polymerkomposition gemäß einem der Ansprüche 1 bis 11 als Dispergiermittel für hydraulische Bindemittel und/oder für latenthydraulische Bindemittel.

## Claims

1. Polymer composition containing 3 to 95% by weight of a copolymer H and 3 to 95% by weight of a copolymer K, the copolymers H and K each having polyether macromonomer structural units and acid monomer structural units, which are present in the copolymers H and K in each case in a molar ratio of 1:20 to 1:1, and at least 20 mol% of all structural units of the copolymer H and at least 25 mol% of all structural units of the copolymer K being present in each case in the form of acid monomer structural units, the polyether macromonomer structural units of the copolymers H and K having side chains containing in each case at least 5 ether oxygen atoms, the number of ether oxygen atoms per side chain of the polyether macromonomer structural units of the copolymers H and K varying in each case in such a way that the corresponding frequency distribution diagrams, in which the number of ether oxygen atoms per side chain of a polyether macromonomer structural unit is plotted in each case along the abscissae and the respectively associated frequencies for the copolymers H or K are plotted in each case along the ordinates, contain in each case at least 2 maxima whose abscissa values differ in each case by more than 7 ether oxygen atoms from one another, the frequency distribution diagrams of the copolymers H and K differing from one another in that the abscissa value of at least one maximum of the copolymer H differs in each case by more than 5 ether oxygen atoms from the abscissa values of all maxima of the copolymer K and/or that the arithmetic means of the ether oxygen atoms of the polyether macromonomer structural units of the copolymers H and K differ from one another by more than 5 ether oxygen atoms.

2. Polymer composition according to Claim 1, containing 10 to 85% by weight of the copolymer H and 10 to 85% by weight of the copolymer K.

3. Polymer composition according to Claim 1 or 2, **characterized in that** at least 50 mol% of all structural units of the copolymer H and at least 50 mol% of all structural units of the copolymer K are present in each case in the form of acid monomer structural units.

4. Polymer composition according to any of Claims 1 to 3, **characterized in that** the number of ether oxygen atoms per side chain of the polyether macromonomer structural units of the copolymers H and K vary in each case in such a way that the corresponding frequency distribution diagrams, in which the number of ether oxygen atoms per side chain of a polyether macromonomer structural unit is plotted in each case along the abscissae and the respectively associated frequencies for the copolymers H or K are plotted along the ordinates, contain in each case at least 2 maxima whose abscissa values differ in each case by more than 10 ether oxygen atoms from one another.

5. Polymer composition according to any of Claims 1 to 4, **characterized in that** the number of ether oxygen atoms per side chain of the polyether macromonomer structural units of the copolymers H and K vary from one another in such a way that the corresponding frequency distribution diagrams, in which the number of ether oxygen atoms per side chain of a polyether macromonomer structural unit is plotted from one another along the abscissae and the respectively associated frequencies for the copolymers H or K are plotted from one another along the ordinates, contain from one another at least 2 maxima whose abscissa values differ from one another by more than 10 ether oxygen atoms, the frequency distribution diagrams of the copolymers H and K differing from one another **in that** the abscissa value of at least one maximum of the copolymer H differs in each case by more than 10 ether oxygen atoms from the abscissa values of all maxima of the copolymer K.

6. Polymer composition according to any of Claims 1 to 5, **characterized in that** the acid monomer structural units of the copolymers H and K are present in each case according to one of the general formulae (Ia), (Ib), (Ic) and/or (Id) 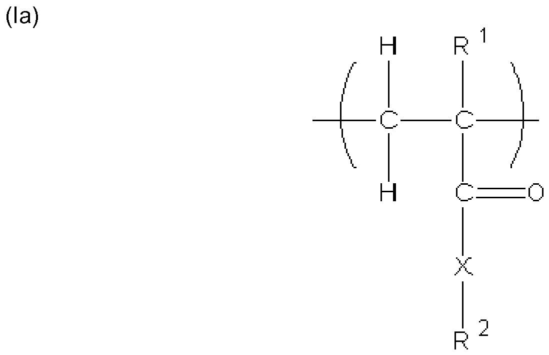 where
R¹ are identical or different and are represented by H and/or a straight-chain or a branched C₁ - C₄ alkyl group;
X are identical or different and are represented by NH-(CₙH₂ₙ) where n = 1, 2, 3 or 4 and/or O-(CₙH₂ₙ) where n = 1, 2, 3 or 4 and/or by a unit not present;
R² are identical or different and are represented by OH, SO₃H, PO₃H₂ O-PO₃H₂ and/or para-substituted C₆H₄-SO₃H, with the proviso that, if X is a unit not present, R² is represented by OH; 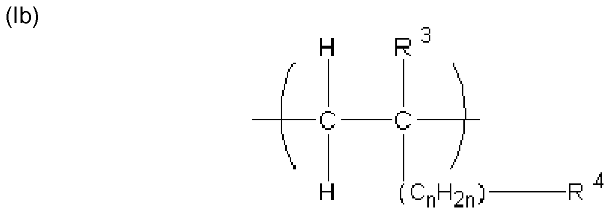 where
R³ are identical or different and are represented by H and/or a straight-chain or branched C₁ - C₄ alkyl group;
n = 0, 1, 2, 3 or 4;
R⁴ are identical or different and are represented by SO₃H, PO₃H₂, O-PO₃H₂ and/or para-substituted C₆H₄-SO₃H; 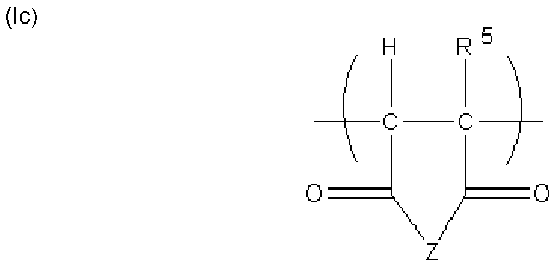 where
R⁵ are identical or different and are represented by H and/or a straight-chain or branched C₁ - C₄ alkyl group;
Z are identical or different and are represented by O and/or NH; 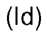 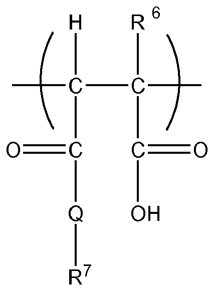 where
R⁶ are identical or different and are represented by H and/or a straight-chain or branched C₁ - C₄ alkyl group;
Q are identical or different and are represented by NH and/or O;
R⁷ are identical or different and are represented by H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ and/or (CₘH₂ₘ)ₑ-O-(A'O)_{α} -R⁹ where m = 0, 1, 2, 3 or 4, e = 0, 1, 2, 3 or 4, A' = C_{x'}H_{2x'} where x' = 2, 3, 4 or 5 and/or CH₂C(C₆H₅)H-, α = an integer from 1 to 350 with R⁹ identical or different and represented by a straight-chain or a branched C₁ - C₄ alkyl group.

7. Polymer composition according to any of Claims 1 to 6, **characterized in that** the acid monomer structural units of the copolymers H and K are produced in each case by incorporation of the acid monomers methacrylic acid, acrylic acid, maleic acid, maleic anhydride and/or monoesters of maleic acid in the form of polymerized units.

8. Polymer composition according to any of Claims 1 to 7, **characterized in that** the polyether macromonomer structural units of the copolymers H and K are present in each case according to one of the general formulae (IIa), (IIb) and/or (IIc) 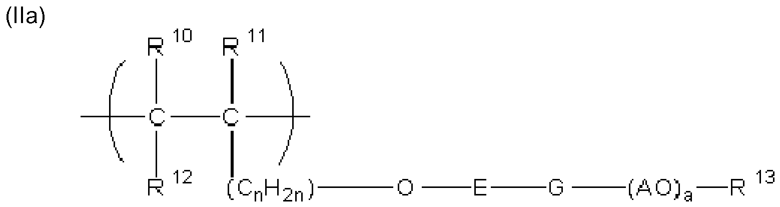 where
R¹⁰, R¹¹ and R¹² in each case are identical or different and, independently of one another, are represented by H and/or a straight-chain or a branched C₁ - C₄ alkyl group;
E are identical or different and are represented by a straight-chain or branched C₁-C₆ alkylene group, a cyclohexyl group, CH₂-C₆H₁₀, ortho-, meta- or para-substituted C₆H₄ and/or a unit not present;
G are identical or different and are represented by O, NH and/or CO-NH, with the proviso that, if E is a unit not present, G is also present as a unit not present;
A are identical or different and are represented by CₓH₂ₓ where x = 2, 3, 4 and/or 5, preferably x = 2 and/or CH₂CH(C₆H₅);
n are identical or different and are represented by 0, 1, 2, 3, 4 and/or 5;
a are identical or different and are represented by an integer from 5 to 350, preferably 10-200;
R¹³ are identical or different and are represented by H, a straight-chain or a branched C₁ - C₄ alkyl group, CO-NH₂ and/or COCH₃; 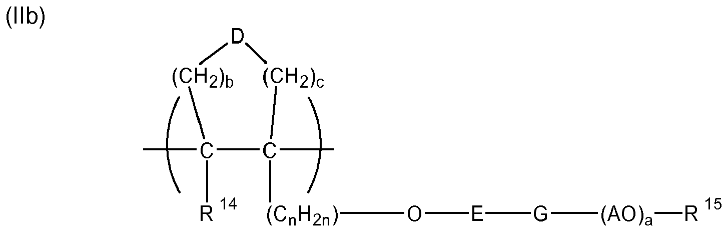 where
R¹⁴ are identical or different and are represented by H and/or a straight-chain or a branched C₁ - C₄ alkyl group;
E are identical or different and are represented by a straight-chain or a branched C₁ - C₆ alkylene group, a cyclohexyl group, CH₂-C₆H₁₀, ortho-, meta- or para-substituted C₆H₄ and/or by a unit not present;
G are identical or different and are represented by a unit not present, O, NH and/or CO-NH, with the proviso that, if E is a unit not present, G is also present as a unit not present;
A are identical or different and are represented by CₓH₂ₓ where x = 2, 3, 4 and/or 5 and/or CH₂CH(C₆H₅);
n are identical or different and are represented by 0, 1, 2, 3, 4 and/or 5;
a are identical or different and are represented by an integer from 5 to 350;
D are identical or different and are represented by a unit not present, NH and/or O, with the proviso that, if D is a unit not present: b= 0, 1, 2, 3 or 4 and c = 0, 1, 2, 3 or 4, where b + c = 3 or 4, and with the proviso that, if D is NH and/or O: b = 0, 1, 2 or 3, c = 0, 1, 2 or 3, where b+c = 2 or 3;
R¹⁵ are identical or different and are represented by H, a straight-chain or a branched C₁ - C₄ alkyl group, CO-NH₂, and/or COCH₃; 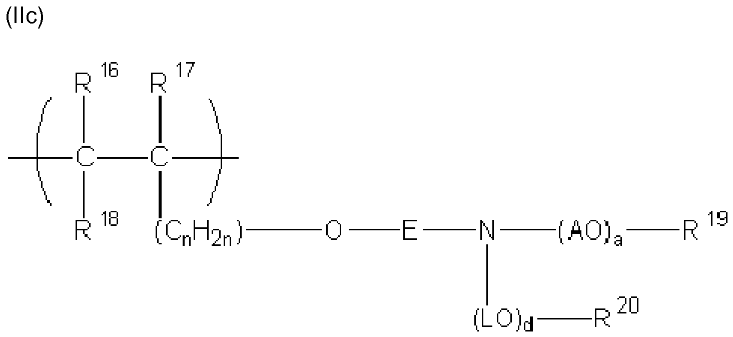 where
R¹⁶, R¹⁷ and R¹⁸ in each case are identical or different and, independently of one another, are represented by H and/or a straight-chain or a branched C₁ - C₄ alkyl group;
E are identical or different and are represented by a straight-chain or a branched C₁ - C₆ alkylene group, a cyclohexyl group, CH₂-C₆H₁₀ and/or ortho-, meta- or para-substituted C₆H₄;
A are identical or different and are represented by CₓH₂ₓ where x = 2, 3, 4 and/or 5 and/or CH₂CH(C₆H₅);
n are identical or different and are represented by 0, 1, 2, 3, 4 and/or 5;
L are identical or different and are represented by CₓH₂ₓ where x = 2, 3, 4 and/or 5 and/or CH₂-CH(C₆H₅);
a are identical or different and are represented by an integer from 5 to 350;
d are identical or different and are represented by an integer from 1 to 350;
R¹⁹ are identical or different and are represented by H and/or a straight-chain or branched C₁ - C₄ alkyl group;
R²⁰ are identical or different and are represented by H and/or a straight-chain C₁-C₄ alkyl group.

9. Polymer composition according to any of Claims 1 to 8, **characterized in that** the polyether macromonomer structural units of the copolymers H and K are produced in each case by incorporation of the polyether macromonomers alkoxylated hydroxybutyl vinyl ether and/or alkoxylated isoprenol and/or alkoxylated (meth)allyl alcohol and/or vinylated methylpolyalkylene glycol having preferably in each case an arithmetic mean of 6 to 300 oxyalkylene groups in the form of polymerized units.

10. Polymer composition according to any of Claims 1 to 9, **characterized in that** the copolymers H and K have in each case the same or different types of polyether macromonomer structural units and/or acid monomer structural units.

11. Polymer composition according to any of Claims 1, 2 or 4 to 10, **characterized in that** in each case at least 45 mol%, preferably at least 80 mol%, of all structural units of the copolymers H and K are produced by incorporation of acid monomer and polyether macromonomer in the form of polymerized units.

12. Dispersant containing at least 30% by weight of water and at least 10% by weight of the polymer composition according to any of Claims 1 to 11.

13. Dispersant according to Claim 12, which is present in the form of an aqueous solution.

14. Process for the preparation of a polymer composition according to any of Claims 1 to 11 or of a dispersant according to Claim 12 or 13, **characterized in that** the copolymers H and K are each prepared separately from one another in aqueous solution and the separately prepared copolymers or the separately prepared aqueous solutions are then mixed with one another.

15. Process according to Claim 14, **characterized in that** acid monomer and polyether macromonomer are reacted by free radical polymerization with the use of a peroxide-containing redox initiator system in aqueous solution, the temperature of the aqueous solution during the polymerization being 10 to 45°C and the pH being 3.5 to 6.5.

16. Use of a polymer composition according to any of Claims 1 to 11 as a dispersant for hydraulic binders and/or for latent hydraulic binders.

## Revendications

1. Composition polymère contenant 3 à 95 % en poids d'un copolymère H et 3 à 95 % en poids d'un copolymère K, les copolymères H et K comprenant chacun des unités structurales à base de macromonomères de polyéther et des unités structurales à base de monomères acides, qui sont chacune présentes dans les copolymères H et K en un rapport molaire de 1:20 à 1:1, et au moins 20 % en moles de l'ensemble des unités structurales du copolymère H et au moins 25 % en moles de l'ensemble des unités structurales du copolymère K se présentant à chaque fois sous la forme d'unités structurales à base de monomères acides, les unités structurales à base de macromonomères de polyéther des copolymères H et K comprenant chacune au moins 5 chaînes latérales contenant des atomes d'oxygène éthérés, le nombre d'atomes d'oxygène éthérés par chaîne latérale des unités structurales à base de macromonomères de polyéther des copolymères H et K variant à chaque fois de manière à ce que les diagrammes de distribution de fréquences correspondants, dans lesquels à chaque fois le nombre d'atomes d'oxygène éthérés par chaîne latérale d'une unité structurale à base de macromonomères de polyéther est représenté en abscisse et les fréquences à chaque fois correspondantes pour les copolymères H et K sont représentées en ordonnée, contiennent à chaque fois au moins 2 maxima, dont les valeurs d'abscisse diffèrent l'une de l'autre à chaque fois de plus de 7 atomes d'oxygène éthérés, les diagrammes de distribution de fréquences des copolymères H et K différant l'un de l'autre en ce que la valeur d'abscisse d'au moins un maximum du copolymère H diffère à chaque fois de plus de 5 atomes d'oxygène éthérés des valeurs d'abscisses de tous les maxima du copolymère K et/ou en ce que les nombres moyens arithmétiques d'atomes d'oxygène éthérés des unités structurales à base de macromonomères de polyéther des copolymères H et K diffèrent l'un de l'autre de plus de 5 atomes d'oxygène éthérés.

2. Composition polymère selon la revendication 1, contenant 10 à 85 % en poids du copolymère H et 10 à 85 % en poids du copolymère K.

3. Composition polymère selon la revendication 1 ou 2, **caractérisée en ce qu'**au moins 50 % en moles de l'ensemble des unités structurales du copolymère H et au moins 50 % en moles de l'ensemble des unités structurales du copolymère K se présentent à chaque fois sous la forme d'unités structurales à base de monomères acides.

4. Composition polymère selon l'une quelconque des revendications 1 à 3, **caractérisée en ce que** le nombre d'atomes d'oxygène éthérés par chaîne latérale des unités structurales à base de macromonomères de polyéther des copolymères H et K varie à chaque fois de manière à ce que les diagrammes de distribution de fréquences correspondants, dans lesquels à chaque fois le nombre d'atomes d'oxygène éthérés par chaîne latérale d'une unité structurale à base de macromonomères de polyéther est représenté en abscisse et les fréquences à chaque fois correspondantes pour les copolymères H et K sont représentées en ordonnée, contiennent à chaque fois au moins 2 maxima, dont les valeurs d'abscisse diffèrent l'une de l'autre à chaque fois de plus de 10 atomes d'oxygène éthérés.

5. Composition polymère selon l'une quelconque des revendications 1 à 4, **caractérisée en ce que** le nombre d'atomes d'oxygène éthérés par chaîne latérale des unités structurales à base de macromonomères de polyéther des copolymères H et K varie à chaque fois de manière à ce que les diagrammes de distribution de fréquences correspondants, dans lesquels à chaque fois le nombre d'atomes d'oxygène éthérés par chaîne latérale d'une unité structurale à base de macromonomères de polyéther est représenté en abscisse et les fréquences à chaque fois correspondantes pour les copolymères H et K sont représentées en ordonnée, contiennent à chaque fois au moins 2 maxima, dont les valeurs d'abscisse diffèrent l'une de l'autre à chaque fois de plus de 10 atomes d'oxygène éthérés, les diagrammes de distribution de fréquences des copolymères H et K différant l'un de l'autre **en ce que** la valeur d'abscisse d'au moins un maximum du copolymère H diffère à chaque fois de plus de 10 atomes d'oxygène éthérés des valeurs d'abscisses de tous les maxima du copolymère K.

6. Composition polymère selon l'une quelconque des revendications 1 à 5, **caractérisée en ce que** les unités structurales à base de monomères acides des copolymères H et K se présentent à chaque fois selon l'une quelconque des formules générales (Ia), (Ib), (Ic) et/ou (Id) 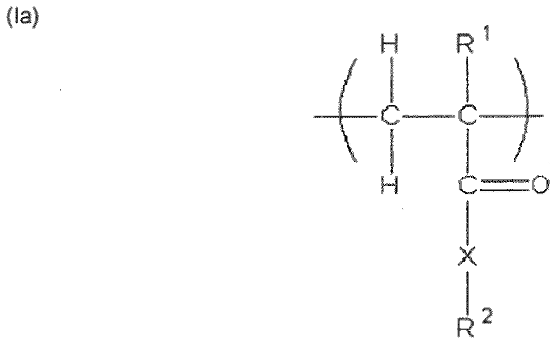 dans laquelle
les R¹ sont identiques ou différents et représentent H et/ou un groupe alkyle en C₁-C₄ non ramifié ou ramifié ; les X sont identiques ou différents et représentent NH-(CₙH₂ₙ) avec n = 1, 2, 3 ou 4 et/ou O-(CₙH₂ₙ) avec n = 1, 2, 3 ou 4 et/ou une unité non présente ;
les R² sont identiques ou différents et représentent OH, SO₃H, PO₃H₂, O-PO₃H₂ et/ou C₆H₄-SO₃H à substitution para, à condition que R² représente OH si X représente une unité non présente ; 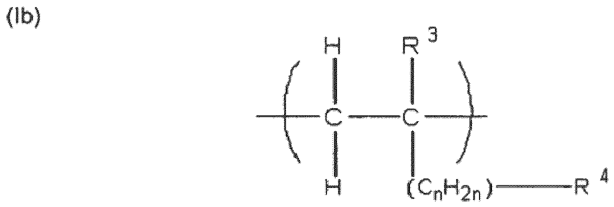 dans laquelle
les R³ sont identiques ou différents et représentent H et/ou un groupe alkyle en C₁-C₄ non ramifié ou ramifié ; n = 0, 1, 2, 3 ou 4,
les R⁴ sont identiques ou différents et représentent SO₃H, PO₃H₂, O-PO₃H₂ et/ou C₆H₄-SO₃H à substitution para ; 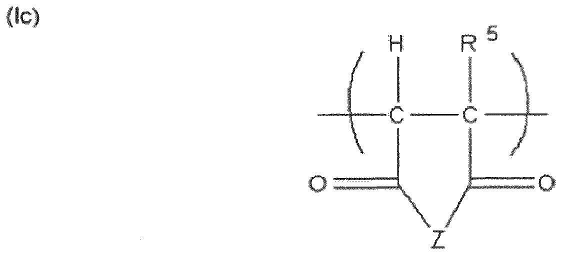 dans laquelle
les R⁵ sont identiques ou différents et représentent H et/ou un groupe alkyle en C₁-C₄ non ramifié ou ramifié ; les Z sont identiques ou différents et représentent 0 et/ou NH ; 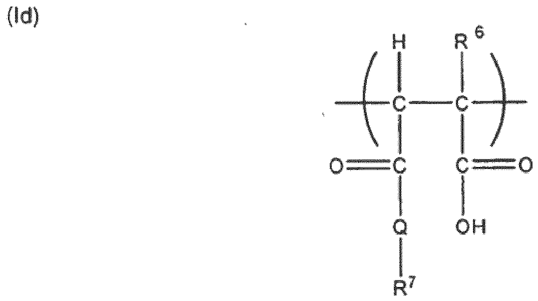 dans laquelle
les R⁶ sont identiques ou différents et représentent H et/ou un groupe alkyle en C₁-C₄ non ramifié ou ramifié ; les Q sont identiques ou différents et représentent NH et/ou O ;
les R⁷ sont identiques ou différents et représentent H, (CₙH₂ₙ)-SO₃H avec n = 0, 1, 2, 3 ou 4, (CₙH₂ₙ)-OH avec n = 0, 1, 2, 3 ou 4, (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄) -PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H2_{x'} avec x' = 2, 3, 4 ou 5 et/ou CH₂C(C₆H₅)H-, α = un nombre entier de 1 à 350, les R⁹ étant identiques ou différents et représentant un groupe alkyle en C₁-C₄ non ramifié ou ramifié.

7. Composition polymère selon l'une quelconque des revendications 1 à 6, **caractérisée en ce que** les unités structurales à base de monomères acides des copolymères H et K sont chacune formées par copolymérisation des monomères acides acide méthacrylique, acide acrylique, acide maléique, anhydride de l'acide maléique et/ou demi-ester de l'acide maléique.

8. Composition polymère selon l'une quelconque des revendications 1 à 7, **caractérisée en ce que** les unités structurales à base de macromonomères de polyéther des copolymères H et K se présentent chacune selon l'une quelconque des formules générales (IIa), (IIb) et/ou (IIc) 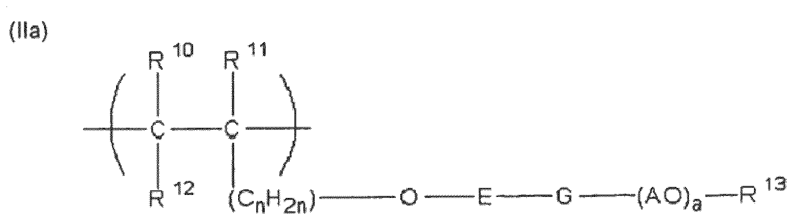 dans laquelle
les R¹⁰, R¹¹ et R¹² sont chacun identiques ou différents et représentent indépendamment les uns des autres H et/ou un groupe alkyle en C₁-C₄ non ramifié ou ramifié ; les E sont identiques ou différents et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les G sont identiques ou différents et représentent 0, NH et/ou CO-NH, à condition que G représente également une unité non présente si E est une unité non présente ;
les A sont identiques ou différents et représentent CₓH₂ₓ avec x = 2, 3, 4 et/ou 5, de préférence x = 2, et/ou CH₂CH(C₆H₅) ;
les n sont identiques ou différents et représentent 0, 1, 2, 3, 4 et/ou 5 ;
les a sont identiques ou différents et représentent un nombre entier de 5 à 350, de préférence de 10 à 200 ; les R¹³ sont identiques ou différents et représentent H, un groupe alkyle en C₁-C₄ non ramifié ou ramifié, CO-NH₂ et/ou COCH₃ ; 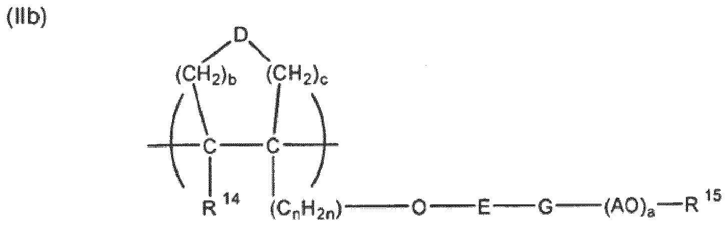 dans laquelle
les R¹⁴ sont identiques ou différents et représentent H et/ou un groupe alkyle en C₁-C₄ non ramifié ou ramifié ; les E sont identiques ou différents et représentent un groupe alkylène en C₁-C₆ non ramifié ou ramifié, un groupe cyclohexyle, CH₂-C₆H₁₀, C₆H₄ à substitution ortho, méta ou para, et/ou une unité non présente ;
les G sont identiques ou différents et représentent une unité non présente, 0, NH et/ou CO-NH, à condition que G représente également une unité non présente si E est une unité non présente ;
les A sont identiques ou différents et représentent CₓH₂ₓ avec x = 2, 3, 4 et/ou 5, et/ou CH₂CH(C₆H₅) ;
les n sont identiques ou différents et représentent 0, 1, 2, 3, 4 et/ou 5 ;
les a sont identiques ou différents et représentent un nombre entier de 5 à 350 ;
les D sont identiques ou différents et représentent une unité non présente, NH et/ou 0, à condition que si D est une unité non présente : b = 0, 1, 2, 3 ou 4 et c = 0, 1, 2, 3 ou 4, avec b + c = 3 ou 4, et à condition que lorsque D représente NH et/ou O : b = 0, 1, 2 ou 3, c = 0, 1, 2 ou 3, avec b + c = 2 ou 3 ;
les R¹⁵ sont identiques ou différents et représentent H, un groupe alkyle en C₁-C₄ non ramifié ou ramifié, CO-NH₂ et/ou COCH₃ ; 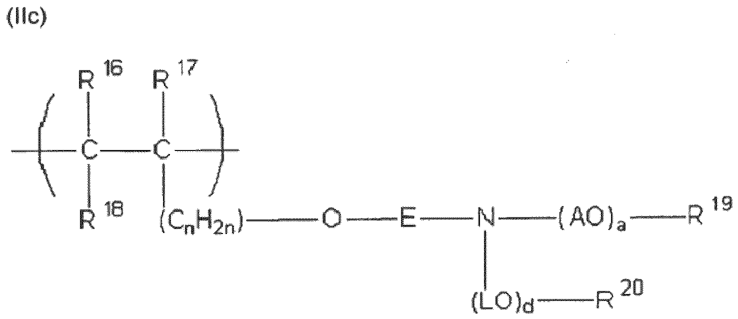 dans laquelle
les R¹⁶, R¹⁷ et R¹⁸ sont chacun identiques ou différents et représentent indépendamment les uns des autres H et/ou un groupe alkyle en C₁-C₄ non ramifié ou ramifié ; les E sont identiques ou différents et représentent un groupe alkylène en C₁-C₆ non ramifié ou ramifié, un groupe cyclohexyle, CH₂-C₆H₁₀ et/ou C₆H₄ à substitution ortho, méta ou para ;
les A sont identiques ou différents et représentent CₓH₂ₓ avec x = 2, 3, 4 et/ou 5, et/ou CH₂CH(C₆H₅) ;
les n sont identiques ou différents et représentent 0, 1, 2, 3, 4 et/ou 5 ;
les L sont identiques ou différents et représentent CₓH₂ₓ avec x = 2, 3, 4 et/ou 5, et/ou CH₂-CH(C₆H₅) ;
les a sont identiques ou différents et représentent un nombre entier de 5 à 350 ;
les d sont identiques ou différents et représentent un nombre entier de 1 à 350 ;
les R¹⁹ sont identiques ou différents et représentent H et/ou un groupe alkyle en C₁-C₄ non ramifié ou ramifié, les R²⁰ sont identiques ou différents et représentent H et/ou un groupe alkyle en C₁-C₄ non ramifié.

9. Composition polymère selon l'une quelconque des revendications 1 à 8, **caractérisée en ce que** les unités structurales à base de macromonomères de polyéther des copolymères H et K sont chacune formées par copolymérisation des macromonomères de polyéther éther d'hydroxybutylvinyle alcoxylé et/ou isoprénol alcoxylé et/ou alcool (méth)allylique alcoxylé et/ou méthylpolyalkylène glycol vinylé contenant de préférence chacun un nombre moyen arithmétique de groupes oxyalkylène de 6 à 300.

10. Composition polymère selon l'une quelconque des revendications 1 à 9, **caractérisée en ce que** les copolymères H et K comprennent chacun des types identiques ou différents d'unités structurales à base de macromonomères de polyéther et/ou d'unités structurales à base de monomères acides.

11. Composition polymère selon l'une quelconque des revendications 1, 2 ou 4 à 10, **caractérisée en ce qu'**à chaque fois au moins 45 % en moles, de préférence au moins 80 % en moles, de toutes les unités structurales des copolymères H et K sont formées par copolymérisation d'un monomère acide et d'un macromonomère de polyéther.

12. Dispersant contenant au moins 30 % en poids d'eau et au moins 10 % en poids de la composition polymère selon l'une quelconque des revendications 1 à 11.

13. Dispersant selon la revendication 12, qui se présente sous la forme d'une solution aqueuse.

14. Procédé de fabrication d'une composition polymère selon l'une quelconque des revendications 1 à 11 ou d'un dispersant selon la revendication 12 ou 13, **caractérisé en ce que** les copolymères H et K sont fabriqués chacun séparément l'un de l'autre dans une solution aqueuse, puis les copolymères fabriqués séparément ou les solutions aqueuses fabriquées séparément sont mélangé(e)s les un(e)s avec les autres.

15. Procédé selon la revendication 14, **caractérisé en ce qu'**un monomère acide et un macromonomère de polyéther sont mis en réaction en solution aqueuse par polymérisation radicalaire en utilisant un système d'initiateur redox contenant un peroxyde, la température de la solution aqueuse pendant la polymérisation étant de 10 à 45 °C et le pH étant de 3,5 à 6,5.

16. Utilisation d'une composition polymère selon l'une quelconque des revendications 1 à 11 en tant que dispersant pour liants hydrauliques et/ou pour liants hydrauliques latents.
